# EUROPEAN PATENT APPLICATION

(11) **EP 4 105 113 A1**
(43) Date of publication of application: **21.12.2022**
(21) Application number: 21754609.2
(22) Date of filing: 12.02.2021
(51) Int. Cl.: B62M 6/45, B62M 6/55

(54) **ELECTRIC ASSISTANCE DEVICE, AND BICYCLE**

(30) Priority: 14.02.2020 JP 2020023841
(71) Applicant: HONDA MOTOR CO., LTD., Minato-ku Tokyo 107-8556 (JP)
(72) Inventor: TSUKAMOTO Kenji, Wako-shi, Saitama 351-0193 (JP); YOKOKAWA Ayatoshi, Wako-shi, Saitama 351-0193 (JP)
(74) Representative: Herzog, Markus
(86) International application number: PCT/JP2021/005193
(87) International publication number: WO 2021/162079

(57) **Abstract**

Provided is an electric power assist device for bicycles, which can achieve proper power assist control in response to the pedaling force without any complicated feature for detecting pedaling forces and any necessity of modification to a bicycle. The device comprises: a pedaling force estimator 154 configured to estimate a pedaling force put on each pedal of a bicycle based on a variation between average current levels I flowing in an electric motor 58 measured within a first crank rotational angle range A and a second crank rotational angle range B which is different from the first crank rotational angle range; and a crank rotational angle adjuster 152 configured to adjust the first crank rotational angle range A and the second crank rotational angle range B according to the gradient of a road on which the bicycle is traveling.

## Description

### TECHNICAL FIELD

The present invention relates to an electric power assist device for bicycles, and a bicycle. In particular, the present invention relates to a control system for controlling an electric motor for generating an assist power.

### BACKGROUND ART

Known power assisted bicycles include those configured to measure the distortion of a pedal system by using a strain gauge, calculate a pedaling force based on the measured distortion value, and control an electric motor based on the calculated pedaling force (See Patent Document 1), and those configured to detect a pedaling force by using a pedaling force sensor, the sensor including a pedaling force transmitting sleeve attached to a crankshaft driven by the pedal, and control an electric motor based on the detected pedaling force (See Patent Document 2).

### PRIOR ART DOCUMENT (S)

### PATENT DOCUMENT(S)

Patent Document 1: JP2007-091159A
Patent Document 2: US6196347B1

### SUMMARY OF THE INVENTION

### TASK TO BE ACCOMPLISHED BY THE INVENTION

Known technologies for power assisted bicycles as described above inconveniently require attaching pedaling force sensing means such as a strain gauge and a pedaling force sensor to a pedal or a crankshaft, which makes a resulting power assisted bicycle have a complicated structure. In particular, adding a pedaling force sensing feature to an existing bicycle necessitates major modifications to the bicycle, which renders it more difficult to retrofit and convert an existing bicycle to a power assisted bicycle.

The present invention has been made in view of the problem of the prior art, and a primary object of the present invention is to provide an electric power assist device which can be used to retrofit and convert an existing bicycle to a power assisted bicycle, thereby achieving proper power assist control in response to the pedaling force, without requiring major modifications to the bicycle, and which can also provide appropriate power assist under various traveling conditions.

### MEANS TO ACCOMPLISH THE TASK

An aspect of the present invention provides an electric power assist device (50) for bicycles, wherein a bicycle (10) is provided with a crankshaft (24) configured to be driven by a pedaling force transmitted from a pedal (30) via a crankarm (26), the electric power assist device comprising: an electric motor (58) connected to the crankshaft or the crankarm of the bicycle in a torque transmitting relationship; and a control unit (150) configured to control the electric motor, wherein the control unit comprises: a pedaling force estimator (154) configured to estimate a pedaling force put on each pedal of the bicycle based on a variation between measurements measured at a first crank rotational angle and a second crank rotational angle which is different from the first crank rotational angle, the measurements being indicative of at least one of a current level flowing in the electric motor, an angular velocity level of the crankshaft, and an angular acceleration level of the crankshaft; a crank rotational angle adjuster (152) configured to adjust at least one of the first crank rotational angle and the second crank rotational angle according to at least one of a gradient level of a road on which the bicycle is traveling, a velocity level of the bicycle, an angular velocity level of the crankshaft, and an angular acceleration level of the crankshaft; and a motor drive controller (160) configured to control the electric motor based on the pedaling force estimated by the pedaling force estimator.

In this configuration, the electric power assist device can be used to retrofit and convert an existing bicycle to a power assisted bicycle, thereby achieving proper power assist control in response to the pedaling force, without requiring major modifications to the bicycle, and also can provide appropriate power assist under various traveling conditions.

Preferably, the above electric power assist device is further configured such that wherein the crank rotational angle adjuster adjusts the first crank rotational angle and the second crank rotational angle such that, when the road on which the bicycle is traveling is flat, the first and second crank rotational angles are set to respective default angles, which are first and second default angles, respectively; that, when the bicycle is traveling on a descending slope, the greater the gradient level of the descending slope is, the more the first and second crank rotational angles are lag-shifted from the first and second default angles, respectively; and that, when the bicycle is traveling on an ascending slope, the greater the gradient level of the ascending slope is, the more the first and second crank rotational angles are lead-shifted from the first and second default angles, respectively.

In this configuration, the electric power assist device can provide appropriate power assist when a bicycle is traveling on any of a flat road, a descending slope road, and an ascending slope road.

Preferably, the above electric power assist device is further configured such that wherein the crank rotational angle adjuster adjusts the first crank rotational angle and the second crank rotational angle such that, when one of the velocity level of the bicycle, the angular velocity level of the crankshaft, and the angular acceleration level of the crankshaft is in a corresponding predetermined reference range, the first and second crank rotational angles are set to respective default angles, which are first and second default angles, respectively; that the more the one of the velocity level of the bicycle, the angular velocity level of the crankshaft, and the angular acceleration level of the crankshaft exceeds the corresponding predetermined reference range, the more the first and second crank rotational angles are lead-shifted from the first and second default angles, respectively; and that the more the one of the velocity level of the bicycle, the angular velocity level of the crankshaft, and the angular acceleration level of the crankshaft falls behind the corresponding predetermined reference range, the more the first and second crank rotational angles are lag-shifted from the first and second default angles, respectively.

In this configuration, the electric power assist device can estimate a pedaling force with proper sensitivity to measurements as a basis of the estimation, thereby providing appropriate power assist, regardless of which measurements are the basis, measurements indicative of the velocity level of the bicycle, the angular velocity level of the crankshaft, or the angular acceleration level of the crankshaft.

Preferably, the above electric power assist device is further configured such that wherein the first default angle is within an angle range between 0 and 90 degrees from a crank rotational angle at which one pedal is at the highest position, and the second default angle is within an angle range between 90 and 180 degrees from the crank rotational angle at which the one pedal is at the highest position.

This configuration can achieve highly accurate estimation of pedaling force.

Preferably, the above electric power assist device is further configured such that wherein the pedaling force estimator estimates the pedaling force based on a variation between first and second averages of the measurements measured within first and second crank rotational angle ranges (A, B), respectively, the second crank rotational angle range being different from the first crank rotational angle range, wherein the first and second crank rotational angle ranges include the first and second crank rotational angles, respectively, and the measurements being indicative of at least one of a current level flowing in the electric motor, an angular velocity level of the crankshaft, and an angular acceleration level of the crankshaft.

This configuration can improve the accuracy of estimation of pedaling force.

Preferably, the above electric power assist device is further configured such that wherein the pedaling force estimator changes respective widths of the first and second crank rotational angle ranges such that the more one of the velocity level of the bicycle, the angular velocity level of the crankshaft, and the angular acceleration level of the crankshaft exceeds a corresponding predetermined reference range, the larger the respective widths of the first and second crank rotational angle ranges, and that the more the one of the velocity level of the bicycle, the angular velocity level of the crankshaft, and the angular acceleration level of the crankshaft falls behind the corresponding predetermined reference range, the smaller the respective widths of the first and second crank rotational angle ranges.

This configuration can provide appropriate power assist, regardless of the velocity level of the bicycle, the angular velocity level of the crankshaft, or the angular acceleration level of the crankshaft.

Another aspect of the present invention provides a bicycle fitted with the above electric power assist device.

In this configuration, the electric power assist device can achieve proper power assist control in response to the pedaling force, without requiring major modifications to the bicycle.

### EFFECT OF THE INVENTION

An electric power assist device according to the present invention can be used to retrofit and convert an existing bicycle to a power assisted bicycle, thereby achieving proper power assist control in response to the pedaling force, and also can provide appropriate power assist under various traveling conditions.

### BRIEF DESCRIPTION OF THE DRAWINGS

Figure 1 is a side view of a bicycle fitted with an electric power assist device according to a first embodiment of the present invention;
Figure 2 is a perspective view of the bicycle fitted with the electric power assist device of the first embodiment;
Figure 3 is a fragmentary exploded perspective view of the electric power assist device and the bicycle of the first embodiment;
Figure 4 is a block diagram of a control system for the electric power assist device of the first embodiment;
Figure 5 is an explanatory view showing the relationship between the position of the pedal and the crank rotational angle of the bicycle of the first embodiment;
Figure 6 is a table showing crank rotational angle ranges used in the electric power assist device when the bicycle is traveling on a flat road and slope road, according to the first embodiment;
Figure 7 is a flowchart of power assist control of the electric power assist device of the first embodiment;
Figure 8 is a table showing crank rotational angle ranges used in the electric power assist device when the bicycle is traveling under different speed-related conditions, according to a second embodiment of the present invention; and
Figures 9A to 9C are explanatory views showing crank rotational angle ranges used in the electric power assist device when the bicycle is traveling under different speed-related conditions, according to a third embodiment of the present invention.

### DESCRIPTION OF THE PREFERRED EMBODIMENT(S)

A bicycle fitted with an electric power assist device of embodiments of the present invention will be described with reference to the drawings.

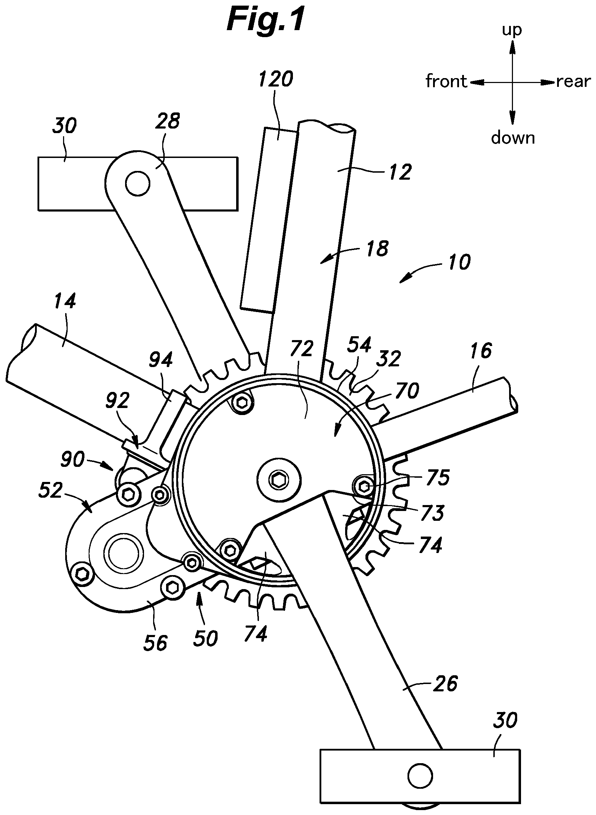

As shown in Figures 1 to 3, a bicycle 10 is provided with a frame structure 18 that includes a seat tube 12 extending substantially in the vertical direction and having a saddle (not shown) attached to the upper end thereof, a down tube 14 extending substantially in the fore and aft direction, and left and right chain stays 16. The lower end of the seat tube 12, the rear end of the down tube 14, and the front ends of the chain stays 16 are connected to one another by a bearing tube 20 for supporting a crankshaft and also serving as a pipe joint.

The bearing tube 20 rotatably supports a crankshaft 24 extending substantially horizontally in the lateral direction. The left and right shaft ends of the crankshaft 24 project out of the bearing tube 20, and the base ends of the left and right crankarms 26 and 28 are fixed to the respective shaft ends of the crankshaft 24 with a rotational phase difference of 180 degrees. The crankshaft 24 forms the rotational center of the crankarms 26 and 28, and the rotational center axis of the crankshaft 24 and the rotational center axis of the crankarms 26 and 28 coincide with each other.

A spline shaft portion 24A is formed on the outer circumferential surface of the shaft end of the crankshaft 24. A spline hole 26A is formed at the base end of the crankarm 26. The spline shaft portion 24A and the spline hole 26A are engaged with each other so that the crankshaft 24 and the crankarm 26 are connected to each other in a torque transmitting relationship.

The outer end of the crankshaft 24 is formed with a screw hole 24B opened at the end surface thereof. The base end of the crankarm 26 is formed with a screw hole 26B coaxially communicating with the spline hole 26A and having an inner diameter larger than that of the spline hole 26A. The screw hole 24B threadably engages a crankarm mounting screw 27 provided with a flange portion that abuts against the annular shoulder surface defined between the spline hole 26A and the screw hole 24B. As a result, the crankarm 26 is prevented from being dislodged from the crankshaft 24.

The connection between the crankshaft 24 and the crankarm 28 on the other side is made in the same manner as the above discussed connection between the crankshaft 24 and the crankarm 26.

A pedal 30 is attached to the free end of each crankarm 26, 28. A drive sprocket 32 (chain wheel) is positioned between the crankarm 28 on the right side and the bearing tube 20. The drive sprocket 32 is coaxially connected (fixed) to the crankshaft 24.

The crankshaft 24 can be rotationally driven by the left and right crankarms 26 and 28. The rotation of the crankshaft 24 is transmitted to the drive sprocket 32, and is transmitted from the drive sprocket 32 to the rear wheel (not shown in the drawings) by a chain transmission mechanism (not shown in the drawings). As a result, the electric power assisted bicycle 10 travels forward.

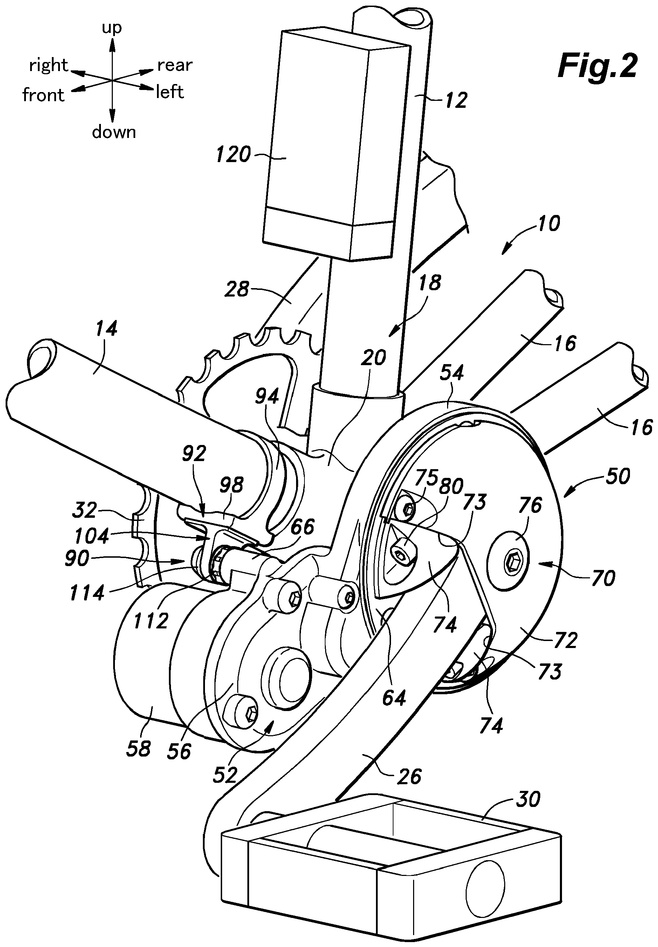

The electric power assisted bicycle 10 is provided with a unitized and retrofittable electric power assist device 50. In the following description, the various directions such as up/down, front/rear, and right/left are based on the state where the electric power assist device 50 is attached to the frame structure 18 of the electric power assisted bicycle 10 as shown in Figures 1 and 2.

The electric power assist device 50 is provided with a housing 52 having a hollow structure. The housing 52 includes a ring portion 54 and a tongue shaped extension portion 56 extending radially outward from the ring portion 54. An electric motor 58 is attached to the right surface of the extension portion 56. One end of the electric motor 58 is fixed to the extension portion 56 so that the rotational axis of the rotor output shaft (not shown) is directed in the lateral direction.

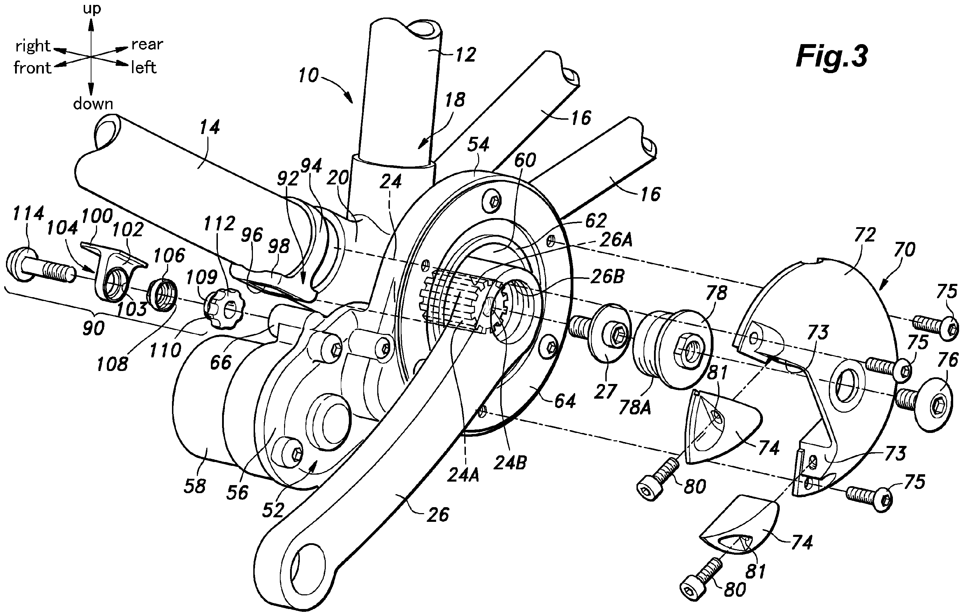

As shown in Figure 3, the ring portion 54 includes a cylindrical portion 62 centrally defining a central opening 60 that is open in the lateral direction, The cylindrical portion 62 rotatably supports an annular rotation output member 64 on the outer periphery thereof. The cylindrical portion 62, together with the rotation output member 64, is disposed in a space between the frame structure 18 and the crankarm 26 in a coaxial relationship with the crankshaft 24 while the crankshaft 24 extends laterally through the central opening 60 in a loosely received state. The rotation output member 64 is connected to the electric motor 58 in a torque transmitting relationship via a gear train (not shown) provided in the housing 52, and is thereby rotationally driven by the electric motor 58 in a coaxial relationship with the crankshaft 24.

The cylindrical portion 62 and the rotation output member 64 are installed in the space between the frame structure 18 and the crankarm 26 by the following procedure.

First, the left pedal 30 which is on the side not fitted with the drive sprocket 32 is removed by using a common tool such as a spanner. Next, with the electric power assist device 50 tilted sideways (the posture in which the electric motor 58 faces upward), the free end side of the left crankarm 26 is inserted into the central opening 60, and with the crankarm 26 passed into the central opening 60, the electric power assist device 50 is moved toward the base end side (rotational center side) of the crankarm 26 along the extending direction of the crankarm 26.

As a result, the crankarm 26 is passed through the cylindrical portion 62 and the rotation output member 64 until the cylindrical portion 62 and the rotation output member 64 are positioned near the base end of the crankarm 26. The inner diameter of the central opening 60 is dimensioned so that the crankarm 26 may be passed through the central opening 60.When the central opening 60 has a large enough inner diameter to allow the pedal 30 attached to the crankarm 26 to be pass through, the assembly work can be performed without requiring the pedal 30 to be removed.

Next, the electric power assist device 50 is oriented to the normal posture (the posture shown in Figure 2) in which the electric motor 58 faces sideways, and the crankshaft 24 is loosely passed into the central opening 60 in the axial direction. As a result, the cylindrical portion 62 and the rotation output member 64 can be positioned between the frame structure 18 and the crankarm 26 with the crankshaft 24 extending laterally and loosely received in the central opening 60 simply by removing the pedal 30 or without even requiring the pedal 30 to be removed.

The rotation output member 64 is connected to the crankshaft 24 and the crankarm 26 by a connecting mechanism 70. The connecting mechanism 70 includes a connecting main member 72 and two clamp members 74.

The screw hole 26B of the crankarm 26 threadably receives a male screw portion 78A of a flanged screw member 78 constituting a mount part for the crankarm 26 of the connecting main member 72. The connecting main member 72 has a substantially circular disk shape, and is fixed to the rotation output member 64 at the peripheral edge thereof by a plurality of bolts 75 and to the screw member 78 at the central part thereof by a bolt 76. As a result, the rotation output member 64 is coaxially positioned relative to the crankshaft 24 via the connecting main member 72 and the crankarm 26.

The two clamp members 74, each having a wedge shape, are positioned on either side of the base end part of the crankarm 26 with respect to the rotational direction thereof, such that each clamp member 74 is in contact with an angled edge 73 of a corresponding connecting main member 72. A bolt 80 is provided for each clamp piece member 74, and as the bolts 80 are tightened to connect the clamp members 74 to the connecting main member 72, the clamp members 74 are caused to slide toward each other guided by the angled edges with interposing the crankarm 26 from both sides with respect to the rotational direction, so that the crankarm 26 and the connecting main member 72 are connected to each other in a torque transmitting relationship.

As a result, the rotation output member 64 is coaxially connected to the crankshaft 24 in a torque transmitting relationship, via the connecting main member 72 and the crankarm 26, and thus the rotation output member 64 and the connecting main member 72 can rotate together with the crankshaft 24. The rotation output member 64 and the connecting main member 72 are collectively referred to as a rotating member.

The clamp members 74 define bolt through-holes 81 (see Figure 3), through which the bolts 80 are passed. The bolt through-holes 81 are each formed in an oval shape so that, as the bolts 80 are tightened to connect the clamp members 74 to the connecting main member 72, the clamp members 74 can slide toward each other.

The extension portion 56 of the housing 52 is positioned under the down tube 14 while supporting the electric motor 58. The extension portion 56 is supported by and suspended from the down tube 14 via a support mechanism 90.

The support mechanism 90 includes a mount member 92. The mount member 92 includes a support base member 98 fixed to the down tube 14 by a fastening band 94 and provided with a rectangular frame structure part 96 in a lower part thereof, and a support member 104, the support member 104 having a rectangular plate-shaped part 100 fitted into the rectangular frame structure part 96 and fixed to the support base member 98, and a depending piece 102 depending downward from the rectangular plate-shaped part 100 and extending in the fore and aft direction.

The depending piece 102 is a cantilever piece, and defines a through-hole 103 which extends in the axial direction of the crankshaft 24 (or in the lateral direction) and is provided with an annular shoulder. A cylindrical fixed bush 106 is fitted in (or fixed to) the through-hole 103 of the depending piece 102 in a rotationally fast manner.

A female screw 108 is formed on the inner circumferential surface of the fixed bush 106. A male screw 109 formed on the outer circumferential surface of a movable bush 110 is threaded with the female screw 108 so that the movable bush 110 can be threaded into and out of the large diameter portion 106B in the axial direction of the crankshaft 24 (i.e., in the lateral direction).

The movable bush 110 is provided with a flange part 112 on the side remote from the fixed bush 106. The outer circumference of the flange part 112 is provided with an uneven shape similar to flower petals so that the movable bush 110 can be turned by hand. The flange surface 112A of the flange part 112 is in direct contact with the laterally inwardly facing end surface 66A of a boss part (connecting part) 66 formed on an upper part of the extension portion 56 of the housing 52.

The mount member 92 fixedly supports the housing 52 with a fastening bolt 114 which is centrally passed through the fixed bush 106 and the movable bush 110 in the axial direction of the crankshaft 24, and threaded into a screw hole 68 (not shown) of the boss part 66.

In this way, the fixed bush 106 and the movable bush 110 are provided with a screw mechanism formed by the female screw 108 and the male screw 109 extending in the axial direction of the crankshaft 24 between the housing 52 and the frame structure 18, the screw mechanism forms an adjustment mechanism capable of adjusting (increasing or decreasing) the distance between the mount member 92 and the housing 52 along the axial direction of the crankshaft 24.

By suitably adjusting the distance along the axial direction, the tilting of the rotation output member 64 with respect to the central axis (crankshaft line) of the crankshaft 24 can be corrected, and the posture of the rotation output member 64 can be adjusted so that the rotation output member 64 extends along a plane orthogonal to the crankshaft axial line.

The extension portion 56 of the housing 52 contains a control unit 150 for electric power assist therein. A battery 120 consisting of a secondary battery that serves as a power source for the electric motor 58 and the control unit 150 is attached to the seat tube 12 by a fastening band (not shown) or any other fastening means.

### (First Embodiment)

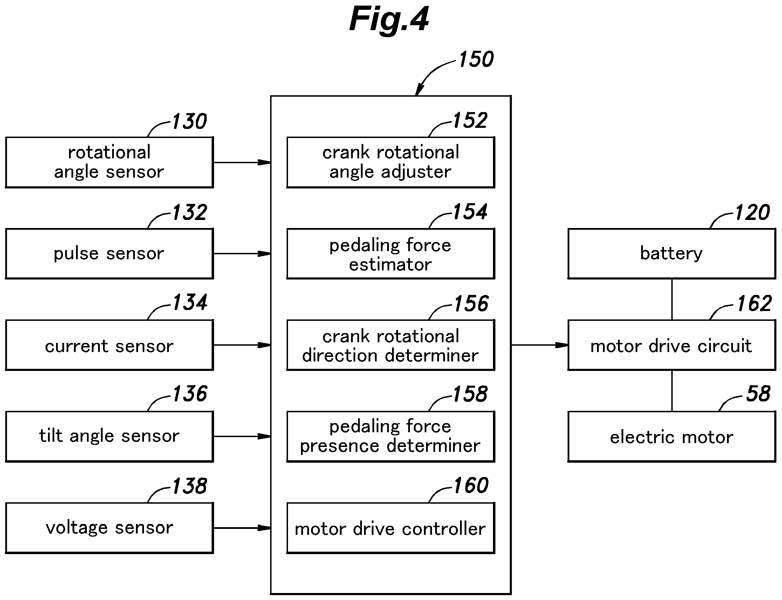

Next, the control system of the electric power assist device 50 will be described with reference to Figure 4.

Connected to the control unit 150 are a rotational angle sensor (rotational angle detection device) 130, a pulse sensor 132, a current sensor 134, a tilt angle sensor (tilt angle detection device) 136, and a voltage sensor 138.

The rotational angle sensor 130 is provided in or on the electric motor 58 or the housing 52, and detects the motor rotational angle or the rotational angle of the rotation output member 64 as a rotational angle (hereinafter, crank rotational angle) θc of the crankshaft 24.

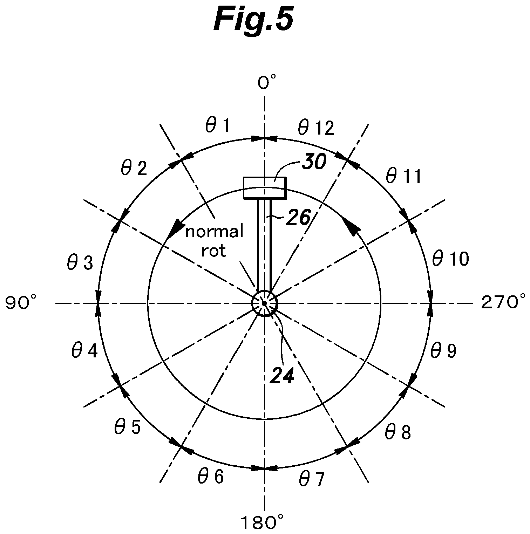

The pulse sensor 132 is provided in the housing 52 and detects the zero point (θc = 0 degree) of the crank rotational angle θc for each rotation of the rotation output member 64. As shown in Figure 5, the crank rotational angle θc = 0 degrees is preset to the rotational angle of the crankshaft 24 in which the pedal 30 of the crankarm 26 is located at the highest position (top dead center position).

The current sensor 134 detects a current (motor current level) I flowing in the electric motor 58. The motor current level I changes in a 360-degree cycle according to the crank rotational angle θc, and the motor current level I also has a correlation with the pedaling force.

The tilt angle sensor 136 includes a gyro sensor provided in the housing 52 and detects tilt angles with respect to gravity, that is, tilt angles in the fore and aft direction and in the left-right direction of a bicycle 10 with respect to the vertical line.

The voltage sensor 138 detects the voltage of the battery 120.

The control unit 150 is an electronically controlled device including a microcomputer and other components. The control unit 150 includes a crank rotational angle adjuster 152, a pedaling force estimator 154, a crank rotational direction determiner 156, a pedaling force presence determiner 158, and a motor drive controller 160.

The crank rotational angle adjuster 152 acquires information related to the crank rotational angle θc from the rotational angle sensor 130, information related to the crank rotational angle θc = 0 degree 24 from the pulse sensor 132, and information related to the tilt angle in the fore and aft direction of the bicycle 10 from the tilt angle sensor 136. The crank rotational angle adjuster 152 adjusts a first crank rotational angle range A and a second crank rotational angle range B according to the tilt angle of the bicycle 10 in the fore and aft direction; that is, the gradient level of a road on which the bicycle is traveling,

As shown in Figure 5, the crank rotational angle adjuster 152 divides one rotation of the crankshaft 24 into 12 equal parts; that is, crank rotational angle ranges θ1 to θ12 in ascending order in the normal rotation direction (toward the advance angle side), and adjusts or changes the first crank rotational angle range A and the second crank rotational angle range B based on the crank rotational angle ranges θ1 to θ12.

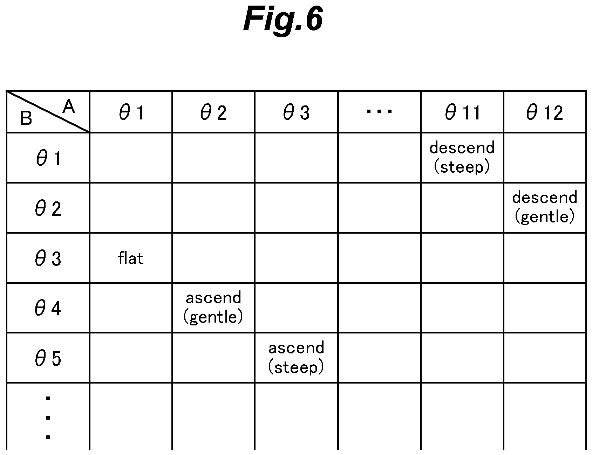

As shown in Figure 6, when the bicycle is traveling on a flat road, the crank rotational angle adjuster 152 sets the first crank rotational angle range A and the second crank rotational angle range B to the crank rotational angle ranges θ1 and θ3 as their default angle ranges, respectively. The crank rotational angle range θ1, which is the default angle range of the first crank rotational angle range A, includes the crank rotational angle θc = 0 degree; that is, a crank rotational angle at which one pedal 30 is at the highest position. The crank rotational angle range θ3, which is the default angle range of the second crank rotational angle range B, includes the crank rotational angle θc = 90 degrees; that is, a crank rotational angle at which the one pedal 30 is rotated by 90 degrees from the highest position. As used herein, the term "flat road" refers to a road with a gradient within a predetermine angular range which includes an angle of zero degree.

The first crank rotational angle range A includes a first crank rotational angle which may have its default angle (first default angle) within an angle range between 0 and 90 degrees from a crank rotational angle at which one pedal is at the highest position, and the second crank rotational angle range B includes a second crank rotational angle which may have its default angle (second default angle) within an angle range between 90 and 180 degrees from the crank rotational angle at which the one pedal is at the highest position.

As shown in Figure 6, when a bicycle is traveling on an ascending slope, the crank rotational angle adjuster 152 lead-shifts the first crank rotational angle range A and the second crank rotational angle range B from the default values in the normal rotational direction. Specifically, when a bicycle is traveling on a gentle ascending slope with the gradient that is less than a predetermine value (small gradient), the crank rotational angle adjuster 152 lead-shifts the first crank rotational angle range A and the second crank rotational angle range B to the crank rotational angle range θ2 and the crank rotational angle range θ4, respectively. When a bicycle is traveling on a steep ascending slope with the gradient that is equal to or greater than the predetermine value (large gradient), the crank rotational angle adjuster 152 lead-shifts the first crank rotational angle range A and the second crank rotational angle range B to the crank rotational angle range θ3 and the crank rotational angle range θ5, respectively.

As shown in Figure 6, when a bicycle is traveling on a descending slope, the crank rotational angle adjuster 152 lag-shifts the first crank rotational angle range A and the second crank rotational angle range B from the default values in the normal rotational direction. Specifically, when a bicycle is traveling on a gentle descending slope with the gradient that is less than a predetermine value (small gradient), the crank rotational angle adjuster 152 lag-shifts the first crank rotational angle range A and the second crank rotational angle range B to the crank rotational angle range θ12 and the crank rotational angle range θ2, respectively. When a bicycle is traveling on a steep descending slope with the gradient that is equal to or greater than the predetermine value (large gradient), the crank rotational angle adjuster 152 lag-shifts the first crank rotational angle range A and the second crank rotational angle range B to the crank rotational angle range θ11 and the crank rotational angle range θ1, respectively.

The pedaling force estimator 154 acquires information related to the crank rotational angle θc from the rotational angle sensor 130, information related to the crank rotational angle θc = 0 degree of the crankshaft 24 from the pulse sensor 132, information related to motor current levels I from the current sensor 140, and information related to tilt angles of the bicycle 10 in the fore and aft direction from the tilt angle sensor 136. The pedaling force estimator 154 estimates the pedaling force of the bicycle 10 based on the variation between the average motor current levels IMa and 1Mb within the first and second crank rotational angle ranges A and B, respectively, the first and second crank rotational angle ranges A and B being set as angular ranges with respect to θc = 0 degree.

As the first crank rotational angle range A and the second crank rotational angle range B are in crank rotational angle ranges in which the motor current level I changes significantly in one rotation of the crankshaft 24, the pedaling force estimator 154 can achieve highly accurate estimation of pedaling force based on the variation between the average motor current levels in the first and second crank rotational angle ranges A and B.

The variation between the average motor current levels IMa and 1Mb is a difference (IMa-IMb) or a ratio (IMa/IMb). The pedaling force estimator 154 estimates a pedaling force such that the greater the difference (IMa-IMb) or the ratio (IMa/IMb) is, the greater the estimated pedaling force.

As the estimation of pedaling force is made based on the variation between the average motor current levels IMa and IMb, more highly accurate and proper estimation of pedaling force can be made compared to the cases where motor current levels are not averaged for the respective crank rotational ranges.

The gradient of a slope road causes the deviation of the top dead center position of a pedal 30 with respect to the vertical line (the direction of gravity), thereby causing a shift of the proper motor current levels at the respective crank rotational angles θ, which, however, can be corrected by the crank rotational angle adjuster 152, which lead-shifts or lag-shifts the first crank rotational angle range A and the second crank rotational angle range B in the normal rotation direction of the crankshaft 24 according to the gradient of a slope (an ascending slope or a descending slope) on which a bicycle is traveling.

The motor drive controller 160 outputs a drive torque control command to a motor drive circuit 162 so as to operate the electric motor 58 with an electric power (current or voltage) according primarily to the pedaling force estimated by the pedaling force estimator 154.

The crank rotational direction determiner 156 determines whether the crankshaft 24 is rotating in a forward direction or in a reverse direction based on a change in the crank rotational angle θc detected by the rotational angle sensor 130. When the crank rotational direction determiner156 determines that the crankshaft 24 rotates in the reverse direction, the motor drive controller 160 performs control to cause the electric motor 58 to stop operating. This prevents the provision of unnecessary power assist when the crankshaft 24 rotates in the reverse direction.

The pedaling force presence determiner 158 determines whether or not a pedaling force is put on a pedal 30, which means a rider is working the pedal 30, based on whether or not there is a change in the crank rotational angle θc of the crankshaft 24 detected by the rotational angle sensor 130.

When the pedaling force presence determiner 158 determines there is no pedaling force on the pedal, the motor drive controller 160 performs control such that the electric motor 58 stops operating. This prevents the provision of unnecessary power assist when there is no pedaling force on the pedal.

The motor drive circuit 162 quantitatively controls the electric power to be supplied from the battery 120 to the electric motor 58 according to the control command from the motor drive controller 160. As a result, the electric motor 58 assists the pedaling with the drive torque determined according to the estimated value of the pedaling force.

The motor drive controller 160 further performs control so as to increase or decrease the rotation output of the electric motor 58 according to the tilts of the bicycle 10 in the left-right direction and the fore and aft direction detected by the tilt angle sensor 136. As a result, when the bicycle 10 is tilted to the left or right during making a turn or being under other conditions, the motor drive controller 160 decreases an amount of power assist, and when the bicycle 10 tilts in the fore and aft direction when traveling an uphill road or under other conditions, the motor drive controller 160 increases an amount of power assist.

As a result, the electric power assist device 50 can provide properly adjusted power assist under various traveling conditions.

The motor drive controller 160 further performs correction control so as to reduce the rotation output of the electric motor 58 in response to the decrease in the voltage applied by the battery 120 detected by the voltage sensor 138. This feature prevents over-discharging of the battery 120, thereby extending the life of the battery 120. This feature can also reduce the power consumption of the battery 120, thereby extending the power assist available distance (duration time) on one charge of the battery 120.

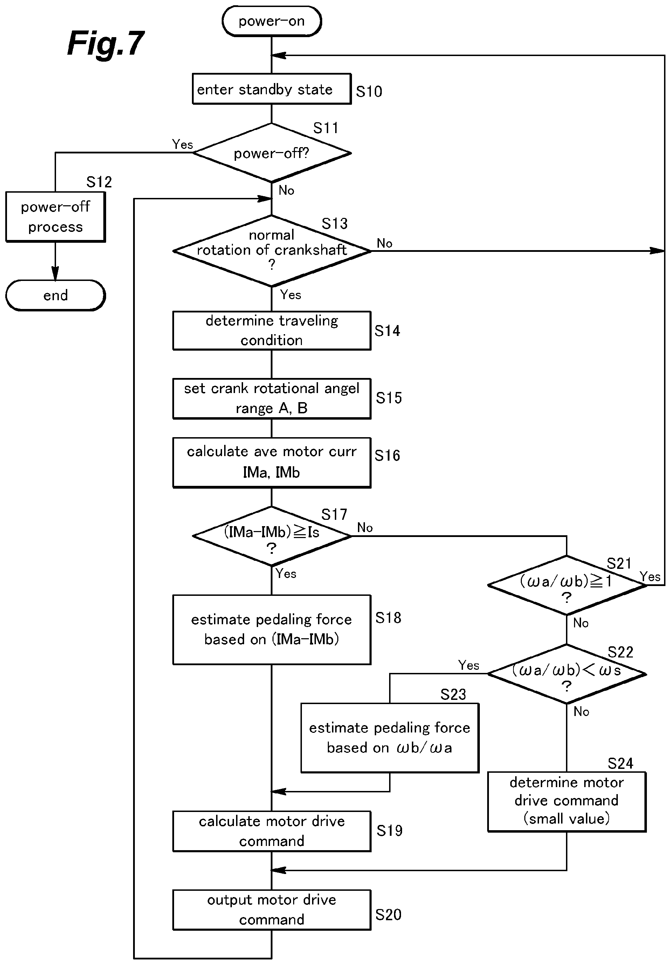

Next, a basic control routine of the control unit 150 (control routine of the first embodiment) will be described with reference to the flowchart shown in Figure 7.

This control routine is started when the electric power assist device 50 is powered on. First, the electric power assist device 50 performs a standby state entry process, causing the electric power assist device 50 to enter a standby state (step S10). The standby state entry process involves feeding power to the sensors 130, 132, 134, 136, and 138 to activate them, and stopping the electric motor 58.

Next, the control unit 150 determines whether or not the electric power assist device 50 is powered off (step S11). When the electric power assist device 50 is powered off, the control unit 150 performs a power-off process (step S12). The power-off process involves stopping the power supply to each of the sensors 130, 132, 134, 136 and 138.

When the electric power assist device 50 is not powered off, the control unit 150 determines whether or not the crankshaft 24 rotates in the normal direction based on signals from the rotational angle sensor 130 (step S13). When the crankshaft 24 does not rotate in the normal direction; that is, when a pedaling force is not put on the pedal 30, the control routine returns to the standby state entry process (step S10) so that the electric motor 58 is kept stopped so as not to assist the pedaling.

When the crankshaft 24 rotates in the normal direction, the control unit 150 determines the traveling condition of the bicycle 10; that is, determines whether the bicycle 10 is traveling on a flat road or a slope road based on signals from the tilt angle sensor 136 (step S14).

Next, as shown in Figure 6, the control unit 150 adjusts a first crank rotational angle range A and a second crank rotational angle range B according to whether the bicycle 10 is traveling on a flat road or a slope road (step S15).

Next, the control unit 150 calculates average values of the motor current levels I (i.e., average motor current levels IMa and 1Mb) within the first and second crank rotational angle ranges A and B, respectively, from signals from the current sensor 134 (step S16).

Next, the control unit 150 determines whether or not the difference (IMa-IMb) is equal to or greater than a present threshold value Is; that is, determines whether or not the variation between the average motor current levels IMa and 1Mb within the crank rotational angle ranges A and B, respectively, is equal to or greater than the threshold value Is (step S17).

When the difference (IMa-IMb) is equal to or greater than the threshold value Is, the control unit 150 performs a calculation for estimating the pedaling force put on the bicycle 10 based on the difference (IMa-IMb) (step S18), calculates a motor drive command value based on the estimated pedaling force (step S19), and outputs a signal of the motor drive command value to the motor drive circuit 162 (step S20).

When the difference (IMa-IMb) is less than the threshold value Is, the control unit 150 determines whether or not the ratio (ωa/ωb) of an angular velocity level ωa or an average of the angular velocity levels within the crank rotational angle range A to an angular velocity level ωb or an average of the angular velocity levels within the crank rotational angle range B is equal to or greater than 1 (step S21). When the ratio (ωa/ωb) is equal to or greater than 1; that is, when no pedaling force is put on the pedal 30, the control routine returns to the standby state entry process (step S10).

When the ratio (ωa/ωb) is less than 1; that is, when a pedaling force is put on the pedal 30, the control unit 150 determines whether or not the ratio (ωa/ωb) is equal to or greater than a present threshold value ωs (step S22).

When the ratio (ωa/ωb) is less than the threshold value ωs, the control unit 150 performs a calculation for estimating the pedaling force put on the bicycle 10 based on the ratio (ωb/ωa) (step S23), calculates a motor drive command value based on the estimated pedaling force (step S19), and outputs a signal of the motor drive command value to the motor drive circuit 162 (step S20).

When the ratio (ωa/ωb) is equal to or greater than the threshold value ωs, the control unit 150 generates a motor drive command value of a predetermine small fixed value (step S24), and outputs a signal of the motor drive command value to the motor drive circuit 162 (step S20).

In either case, after the control unit 150 outputs to the motor drive circuit 162, the process returns to the step of determining whether or not the crankshaft 24 rotates in the normal direction (step S13), and the control unit 150 repeatedly performs the same steps to make calculation and determination, and then output a signal of the motor drive command value to the motor drive circuit 162 (steps S14 to S25).

In the above-described steps (steps S21 to 23), the determination and calculation are based on a ratio between two angular velocity levels of the crankshaft 24 within two predetermined crank rotational angle ranges. In other cases, the determination and calculation may be based on a ratio between two angular acceleration levels of the crankshaft 24 within two predetermined crank rotational angle ranges.

In the present embodiment, the control unit adjusts the first and second crank rotational angle ranges A and B, for which corresponding average motor current levels IMa and 1Mb are calculated, based on whether the bicycle 10 is traveling on a flat road or a slope road. As a result, the proper estimation of the pedaling force can be made based on the average motor current levels IMa and 1Mb so that the electric power assist device can provide appropriate power assist, in either case of whether the bicycle 10 is traveling on a flat road or a slope road.

### (Second Embodiment)

In a second embodiments of the present invention, the crank rotational angle adjuster 152 fixes the first crank rotational angle range A to its default angle range i.e., the crank rotational angle range θ1, and adjusts the second crank rotational angle range B, for which the average of motor current levels I (the average motor current levels IMb) is calculated, based on one of a velocity level of the bicycle 10, an angular velocity level (rotational velocity level) of the crankshaft 24, and an angular acceleration level of the crankshaft 24.

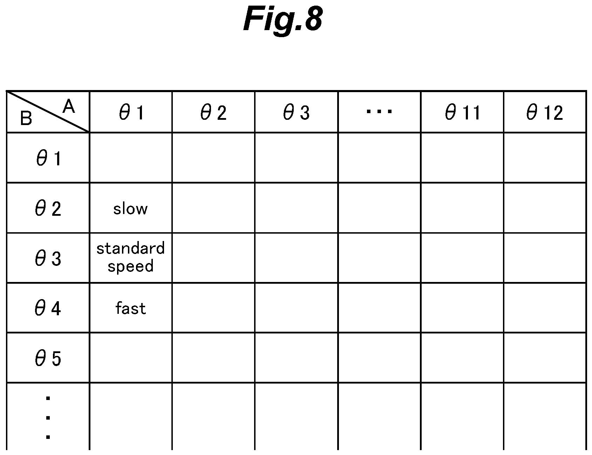

In this case, as shown in Figure 8, when one of a velocity level of the bicycle 10, an angular velocity level of the crankshaft 24, and an angular acceleration level of the crankshaft 24 is in a corresponding predetermined reference range (standard speed), the crank rotational angle adjuster 152 sets the second crank rotational angle range B to the default angle range (i.e., the crank rotational angle range θ3). When the one of the velocity level of the bicycle 10, the angular velocity level of the crankshaft 24, and the angular acceleration level of the crankshaft 24 exceeds the corresponding predetermined reference range (fast), the crank rotational angle adjuster 152 lead-shifts the second crank rotational angle range B from the default angle range (to the crank rotational angle range θ4). When the one of the velocity level of the bicycle 10, the angular velocity level of the crankshaft 24, and the angular acceleration level of the crankshaft 24 falls behind the corresponding predetermined reference range (slow), the crank rotational angle adjuster 152 lag-shifts the second crank rotational angle range B from the default angle range (to the crank rotational angle range θ2). As described above, the "standard speed" in Figure 8 means that a velocity-or-acceleration-related level is within a corresponding predetermined reference range.

As a result, in any case in which the one of the velocity level of the bicycle 10, the angular velocity level of the crankshaft 24, and the angular acceleration level of the crankshaft 24 is equal to, exceeds, or falls behind the corresponding predetermined reference range, the electric power assist device can provide appropriate power assist.

### (Third Embodiment)

In a third embodiments of the present invention, the crank rotational angle adjuster 152 adjusts the first and second crank rotational angle ranges A and B, for which the average motor current levels IMa and 1Mb are calculated, respectively, based on one of a velocity level of the bicycle 10, an angular velocity level (rotational velocity level) of the crankshaft 24, and an angular acceleration level of the crankshaft 24.

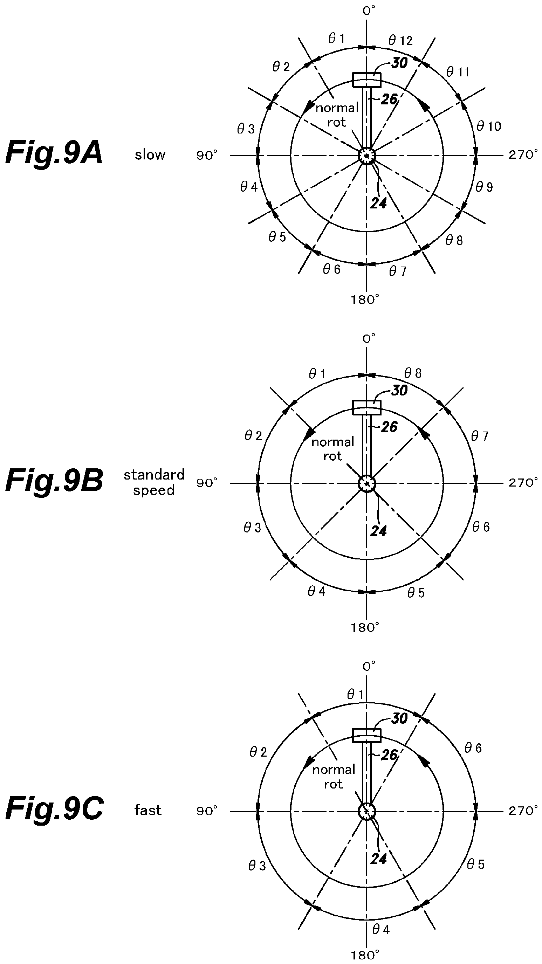

In this case, when one of a velocity level of the bicycle 10, an angular velocity level of the crankshaft 24, and an angular acceleration level of the crankshaft 24 is in a corresponding predetermined reference range (standard speed), the crank rotational angle adjuster 152 divides one rotation of the crankshaft 24 into eight equal parts so that the first and second crank rotational angle ranges A and B each have an angular width of 45 degrees, as shown in Figure 9B. When the one of the velocity level of the bicycle 10, the angular velocity level of the crankshaft 24, and the angular acceleration level of the crankshaft 24 exceeds the corresponding predetermined reference range (fast), the crank rotational angle adjuster 152 divides one rotation of the crankshaft 24 into six equal parts so that the first and second crank rotational angle ranges A and B each have an angular width of 60 degrees, as shown in Figure 9C. When the one of the velocity level of the bicycle 10, the angular velocity level of the crankshaft 24, and the angular acceleration level of the crankshaft 24 falls behind the corresponding predetermined reference range (slow), the crank rotational angle adjuster 152 divides one rotation of the crankshaft 24 into 12 equal parts so that the first and second crank rotational angle ranges A and B each have an angular width of 30 degrees, as shown in Figure 9A.

Specifically, the more the one of the velocity level of the bicycle 10, the angular velocity level of the crankshaft 24, and the angular acceleration level of the crankshaft 24 exceeds the corresponding predetermined reference range, the smaller the number n of equal parts resulting from the division of one rotation of the crankshaft 24. The more the one of the velocity level of the bicycle 10, the angular velocity level of the crankshaft 24, and the angular acceleration level of the crankshaft 24 falls behind the corresponding predetermined reference range, the larger the number n of equal parts resulting from the division of one rotation of the crankshaft 24.

When the one of the velocity level of the bicycle 10, the angular velocity level of the crankshaft 24, and the angular acceleration level of the crankshaft 24 falls behind the corresponding predetermined reference range so that the respective widths of the first and second crank rotational angle ranges become large, the determination of the presence of a pedaling force and the estimation of a pedaling force are made with higher sensitivity to measurements, causing the electric power assist device to provide power assist more frequently. Conversely, when the one of the velocity level of the bicycle 10, the angular velocity level of the crankshaft 24, and the angular acceleration level of the crankshaft 24 exceeds the corresponding predetermined reference range so that the respective widths of the first and second crank rotational angle ranges become small, the determination of the presence of a pedaling force and the estimation of a pedaling force are made with lower sensitivity to measurements, causing the electric power assist device to provide power assist less frequently.

As a result, in any case in which the one of the velocity level of the bicycle 10, the angular velocity level of the crankshaft 24, and the angular acceleration level of the crankshaft 24 is equal to, exceeds, or falls behind the corresponding predetermined reference range, the electric power assist device can provide appropriate power assist.

The present invention has been described in terms of specific embodiments, but is not limited by such embodiments, and can be modified in various ways without departing from the scope of the present invention. For example, the estimation of a pedaling force may be made not based on measurements of the motor current level, but on one of the velocity level of the bicycle 10, the angular velocity level of the crankshaft 24, and the angular acceleration level of the crankshaft 24, in the first and second crank rotational angle ranges A and B. In other cases, the estimation of a pedaling force may be made not based on average motor current levels in the predetermined crank rotational angle ranges, but on motor current levels measured at predetermined crank rotational angles.

In addition, all of the components shown in the above-described embodiments are not necessarily essential for the present invention, but can be appropriately omitted and substituted as long as such omission and substitution do not deviate from the gist of the present invention.

### GLOSSARY

- 10: bicycle
- 12: seat tube
- 14: down tube
- 16: chain stay
- 18: frame structure
- 20: bearing tube
- 24: crankshaft
- 26: crankarm
- 26A: spline hole
- 27: crankarm mounting screw
- 28: crankarm
- 30: pedal
- 32: drive sprocket
- 50: electric power assist device
- 52: housing
- 54: ring portion
- 56: extension portion
- 58: electric motor
- 60: central opening
- 62: cylindrical portion
- 64: rotation output member
- 66: boss part
- 70: connecting mechanism
- 72: connecting main member
- 74: clamp member
- 75: bolt
- 76: bolt
- 78: screw member
- 80: bolt
- 81: through-hole
- 90: support mechanism
- 92: mount member
- 94: fastening band
- 96: rectangular frame structure part
- 98: support base member
- 100: rectangular plate-shaped part
- 102: depending piece
- 103: through-hole
- 104: support member
- 106: fixed bush
- 108: female screw
- 109: male screw
- 110: movable bush
- 112: flange part
- 114: fastening bolt
- 120: battery
- 130: rotational angle sensor (rotational angle detection device)
- 132: pulse sensor
- 134: acceleration sensor (acceleration detection device)
- 136: tilt angle sensor (tilt angle detection device)
- 138: voltage sensor
- 150: control unit
- 152: crank rotational angle adjuster
- 154: pedaling force estimator
- 156: crank rotational direction determiner
- 158: pedaling force presence determiner
- 160: motor drive controller
- 162: motor drive circuit
- A: first crank rotational angle
- B: second crank rotational angle

## Claims

1. An electric power assist device for bicycles, wherein a bicycle is provided with a crankshaft configured to be driven by a pedaling force transmitted from a pedal via a crankarm, the electric power assist device comprising:
an electric motor connected to the crankshaft or the crankarm of the bicycle in a torque transmitting relationship; and
a control unit configured to control the electric motor,
wherein the control unit comprises:
a pedaling force estimator configured to estimate a pedaling force put on each pedal of the bicycle based on a variation between measurements measured at a first crank rotational angle and a second crank rotational angle which is different from the first crank rotational angle, the measurements being indicative of at least one of a current level flowing in the electric motor, an angular velocity level of the crankshaft, and an angular acceleration level of the crankshaft;
a crank rotational angle adjuster configured to adjust at least one of the first crank rotational angle and the second crank rotational angle according to at least one of a gradient level of a road on which the bicycle is traveling, a velocity level of the bicycle, an angular velocity level of the crankshaft, and an angular acceleration level of the crankshaft; and
a motor drive controller configured to control the electric motor based on the pedaling force estimated by the pedaling force estimator.

2. The electric power assist device according to claim 1, wherein the crank rotational angle adjuster adjusts the first crank rotational angle and the second crank rotational angle such that, when the road on which the bicycle is traveling is flat, the first and second crank rotational angles are set to respective default angles, which are first and second default angles, respectively;
that, when the bicycle is traveling on a descending slope, the greater the gradient level of the descending slope is, the more the first and second crank rotational angles are lag-shifted from the first and second default angles, respectively; and
that, when the bicycle is traveling on an ascending slope, the greater the gradient level of the ascending slope is, the more the first and second crank rotational angles are lead-shifted from the first and second default angles, respectively.

3. The electric power assist device according to claim 1, wherein the crank rotational angle adjuster adjusts the first crank rotational angle and the second crank rotational angle such that, when one of the velocity level of the bicycle, the angular velocity level of the crankshaft, and the angular acceleration level of the crankshaft is in a corresponding predetermined reference range, the first and second crank rotational angles are set to respective default angles, which are first and second default angles, respectively;
that the more the one of the velocity level of the bicycle, the angular velocity level of the crankshaft, and the angular acceleration level of the crankshaft exceeds the corresponding predetermined reference range, the more the first and second crank rotational angles are lead-shifted from the first and second default angles, respectively; and
that the more the one of the velocity level of the bicycle, the angular velocity level of the crankshaft, and the angular acceleration level of the crankshaft falls behind the corresponding predetermined reference range, the more the first and second crank rotational angles are lag-shifted from the first and second default angles, respectively.

4. The electric power assist device according to claim 2 or 3, wherein the first default angle is within an angle range between 0 and 90 degrees from a crank rotational angle at which one pedal is at the highest position, and the second default angle is within an angle range between 90 and 180 degrees from the crank rotational angle at which the one pedal is at the highest position.

5. The electric power assist device according to claim 1 or 2, wherein the pedaling force estimator estimates the pedaling force based on a variation between first and second averages of the measurements measured within first and second crank rotational angle ranges, respectively, the second crank rotational angle range being different from the first crank rotational angle range, wherein the first and second crank rotational angle ranges include the first and second crank rotational angles, respectively, and the measurements being indicative of at least one of a current level flowing in the electric motor, an angular velocity level of the crankshaft, and an angular acceleration level of the crankshaft.

6. The electric power assist device according to claim 5, wherein the pedaling force estimator changes respective widths of the first and second crank rotational angle ranges such that the more one of the velocity level of the bicycle, the angular velocity level of the crankshaft, and the angular acceleration level of the crankshaft exceeds a corresponding predetermined reference range, the larger the respective widths of the first and second crank rotational angle ranges, and that the more the one of the velocity level of the bicycle, the angular velocity level of the crankshaft, and the angular acceleration level of the crankshaft falls behind the corresponding predetermined reference range, the smaller the respective widths of the first and second crank rotational angle ranges.

7. A bicycle fitted with the electric power assist device according to any one of claims 1 to 6.
